# EUROPÄISCHE PATENTSCHRIFT

(11) **EP 0 970 599 B1**
(45) Veröffentlichungstag und Bekanntmachung des Hinweises auf die Patenterteilung: **25.09.2002**
(21) Anmeldenummer: 99107052.5
(22) Anmeldetag: 09.04.1999
(51) Int. Cl.: A01F 15/07

(54) **Rundballenpresse**
Rotobaler
Presse à balles rondes

(30) Priorität: 09.07.1998 DE 29812262 U
(43) Veröffentlichungstag der Anmeldung: 12.01.2000
(73) Patentinhaber: Kverneland Geldrop B.V., 5660 AA Geldrop (NL)
(72) Erfinder: Quataert, Petrus, M., 5126 GL Gilze (NL)
(74) Vertreter: Grünecker, Kinkeldey, Stockmair & Schwanhäusser Anwaltssozietät

(56) Entgegenhaltungen:
- EP-A- 0 264 492
- DE-U- 29 713 514

## Beschreibung

Die Erfindung betriff eine Rundballenpresse der im jeweiligen Oberbegriff der Ansprüche 1 bis 3 angegebenen Art.

Zu Rundballenpressen erfordert die Übertragung der Antriebsbewegung für z.B. in der Klappe angeordnete Preßelemente (Preßwalzen, Preßriemen- oder Preßbänder, Leiterbänder oder Rollengänge) erheblichen baulichen Aufwand, weil sich die Klappe beim Öffnen relativ zum Gehäuse, z.B. um eine Schwenklagerung des Gehäuses, bewegen muß.

Bei einer aus DE-U-297 13 514 bekannten Rundballenpresse werden bei geschlossener Klappe in der Klappe arbeitende Preßelemente mit einem Rahmen im Gehäuse schwenkbar gelagert. Dank der Lagerung des Rahmens im Gehäuse läßt sich die Antriebsverbindung zu den Preßelementen einfach gestalten. Jedoch verbleibt der Rahmen mit den Preßelementen beim Öffnen der Klappe am Gehäuse.

Der Erfindung liegt die Aufgabe zugrunde, eine Rundballenpresse der eingangs genannten Art zu schaffen, die eine baulich einfache und funktionssichere Antriebsverbindung zu wenigstens einem in der Klappe angeordneten, antreibbaren Preßelement aufweist.

Die gestellte Aufgabe wird wahlweise mit den Merkmalen der nebengeordneten Ansprüche 1, 2 und 3 gelöst.

Gemäß Anspruch 1 wird eine Zahnradübertragung mit miteinander kämmenden Zahnrädern gewählt, wobei die Antriebsverbindung beim Öffnen der Klappe automatisch unterbrochen und beim Schließen der Klappe wieder hergestellt wird. Dies hat den Vorteil, daß die Antriebsverbindung dort angeordnet werden kann, wo das Preßelement auf kürzestem Weg anzutreiben ist.

Gemäß Anspruch 2 wird die üblicherweise zum Festlegen der Klappe in der Schließposition erzeugte Verriegelungskraft benutzt, ein Zwischenzahnrad in seine Kuppelstellung zu bringen und dort zu halten, um die Antriebsverbindung herzustellen. Das Zwischenzahnrad bewirkt auch eine Drehrichtungsumkehr, so daß beispielsweise direkt die Antriebsbewegung von dem mit einer Starterwalze gekuppelten Antriebszahnrad abgreifbar ist. Weiterhin ist das Herstellen der Antriebsverbindung unabhängig von der Schnelligkeit oder Heftigkeit der Schließbewegung der Klappe. Das Kuppeln der Zahnräder kann überlappend mit der Schließbewegung, um auch die Schließbewegung für das Eingreifen der Verzahnungen nutzen zu können, oder unabhängig von der Schließbewegung, indem das Zwischenrad erst verstellt wird, wenn die Klappe ordnungsgemäß in die Schließstellung gelangt ist. in diesem Fall lassen sich die Verzahnungen mit Nachdruck und deshalb schnell und verschleißarm in den Eingriff zwingen, wenn die Verriegelungskraft für die Klappe aufgebaut wird.

Gemäß Anspruch 3 ist das Zwischenzahnrad, das für die Drehrichtungsumkehr verantwortlich ist, unabhängig von der Schließbewegung der Klappe oder dem Aufbauen einer Verriegelungskraft für die Klappe verstellbar. Es läßt sich das Zwischenzahnrad auf optimale Weise und mit einem für den Eingriff günstigen Bewegungsverlauf in den Eingriff mit beispielsweise dem Abtriebszahnrad drücken und genauso aus dem Eingriff lösen. im Vergleich mit dem großen Radius, mit dem die Verzahnung des Abtriebszahnrads sich mit der Klappe bewegt, ist der Radius der Krümmungsbahn, mit dem das Zwischenzahnrad in den Eingriff gedrückt wird, erheblich kleiner, was den Eingriff vereinfacht und rasch ablaufen läßt.

In allen drei Fällen können die Greifelemente direkt und ohne bauliche Verbindung mit dem Gehäuse in der Klappe untergebracht sein, so daß sie Öffnungs- und Schließbewegungen mitmachen. Kern der Erfindung ist somit eine durch die Öffnungs- und Schließbewegungen der Klappe los- und einrückbare Antriebsverbindung zu den zur Gänze in der Klappe gelagerten Preßelementen, wobei sich aufeinander ausgerichtete Teile der Antriebsverbindung am Gehäuse und an der Klappe befinden.

Zweckmäßig erfüllt der Klappenzylinder eine Doppelfunktion, weil er bei Aufbau der Klappenverriegelungskraft das Zwischenzahnrad mit dem Abtriebszahnrad in Eingriff bringt und die Antriebsverbindung herstellt. Dadurch läßt sich ein sauberer Eingriff erzielen. Hingegen wird vor dem Öffnen der Klappe bereits das Zwischenzahnrad aus dem Eingriff mit dem Abtriebszahnrad gelöst, und zwar relativ rasch, so daß auch beim langsamen Öffnen der Klappe die gegenseitigen Verzahnungen nicht mehr verschleißintensiv übereinander springen.

Es läßt sich alternativ ein Stellmotor benutzen, um das Einkuppeln bzw. Auskuppeln der Antriebsverbindung zwangsweise zu steuern, und zwar mit optimaler Kraft bzw. Geschwindigkeit, die zu einem raschen und verschleißarmen Eingriff der Verzahnungen führen.

Zweckmäßig wird ein Hilfsmechanismus herangezogen, um den Eingriff der jeweiligen Verzahnungen zu unterstützen, damit der Verschleiß der Verzahnungen so gering wie möglich bleibt. Auf einfache Weise wird die Relativbewegung der Klappe beim Schließen zum Betätigen des Hilfsmechanismus eingesetzt, so daß sich ein sehr einfacher robuster und zuverlässiger Aufbau ergibt.

Günstig ist der Hilfsmechanismus am Gehäuse angebracht, derart, daß er in den Bewegungsweg der Verzahnung des Abtriebszahnrades eingreift, wenn sich dieses beim Schließen der Klappe dem Antriebszahnrad nähert. Dadurch wird das Abtriebszahnrad verübergehend in Wickelrichtung in Bewegung versetzt, damit die dann noch rotierende Verzahnung des Antriebszahnrades bzw. Zwischenzahnrades leicht in die dann im richtigen Sinn in Drehung versetzte Verzahnung des Abtriebszahnrades eingreift. Es wird zwar nicht unbedingt der gesamte Geschwindigkeitsunterschied zwischen den in Eingriff zu bringenden Verzahnungen beseitigt; jedoch reicht es für eine schonende Eingriffsbewegung aus, wenn das einzukuppelnde Abtriebszahnrad im richtigen Sinn zumindest eine geringfügige Dreh-Bewegung ausführt

Zweckmäßig ist das Zwischenzahnrad federnd abgestützt, so daß es bei der Annäherung des Abtriebszahnrades nachgeben kann, wenn die Verzahnungen nicht gleich ineinandergleiten sollten. Sobald die Verzahnungen ineinander zu gleiten beginnen, wirkt die Federkraft zusätzlich in Eingriffsrichtung, um rasch die Antriebsverbindung herzustellen.

Alternativ gelangt die Verzahnung des Abtriebszahnrades bei der Schließbewegung der Klappe in einen vorübergehenden Eingriff mit dem Eingriffsglied der Klinke, die dann an einem Anschlag abgefangen wird, so daß das Abtriebszahnrad im richtigen Sinn in Drehbewegung versetzt wird und leicht in die Verzahnung des Antriebszahnrades bzw. Zwischenzahnrades eingreift, nachdem die Verzahnung des Abtriebszahnrades vom Eingriffsglied der Klinke gelöst ist.

Ein besonders kräftiger Synchronisier-Bewegungsimpuls wird mittels zusätzlicher Federkraft über die Klinke auf das Abtriebszahnrad ausgeübt Es ist möglich, einen relativ langen gegenseitigen Eingriff zwischen der Klinke und dem Abtriebszahnrad zu erreichen, d.h., einen relativ großen Anteil der Schließbewegung der Klappe zum Andrehen des Abtriebszahnrades einzusetzen.

Zweckmäßig läßt sich der Eingriff zum Andrehen des Abtriebszahnrades durch einen stangen- oder bügelartigen Verzahnungsträger mit mehreren Eingriffsgliedern vergrößern.

Baulich einfach wird ein Reibschluß, gegebenenfalls mit Verformungseingriff in den elastischen Körper, dazu benutzt, das Abtriebszahnrad im für den Eingriff richtigen Drehsinn anzutreiben, derart, daß sich das Abtriebszahnrad beim Auftreffen auf das Antriebszahnrad bzw. das Zwischenzahnrad noch dreht und leicht in Eingriff gelangt.

Es können anstelle stirnverzahnter Zahnräder Kettenräder oder sogar Reibräder in der Antriebsverbindung verwendet werden.

Es liegt auf der Hand, daß eine derartige Antriebsverbindung nur auf einer Seite der Preßkammer oder auf beiden Seiten der Preßkammer vorgesehen sein kann.

Anhand der Zeichnung werden Ausführungsformen des Erfindungsgegenstandes erläutert. Es zeigen:
- Fig. 1: eine schematische Seitenansicht einer Rundballenpresse,
- Fig. 2: schematisch eine gelöste Antriebsverbindung der Rundballenpresse von Fig. 1,
- Fig. 3A + B: zwei Stellungen einer anderen Ausführungsform einer Antriebsverbindung,
- Fig. 4A + B: zwei unterschiedliche Betriebsstellungen einer weiteren Ausführungsform einer Antriebsverbindung,
- Fig. 5: eine weitere Ausführungsform einer Antriebsverbindung in gelöster Stellung,
- Fig. 6A + B: eine weitere Ausführungsform einer Antriebsverbindung in zwei unterschiedlichen Betriebsstellungen,
- Fig. 7: eine weitere Ausführungsform einer Antriebsverbindung in einer eingekuppelten Stellung, und
- Fig. 8: eine weitere Ausführungsform einer Antriebsverbindung in gelöster Stellung.

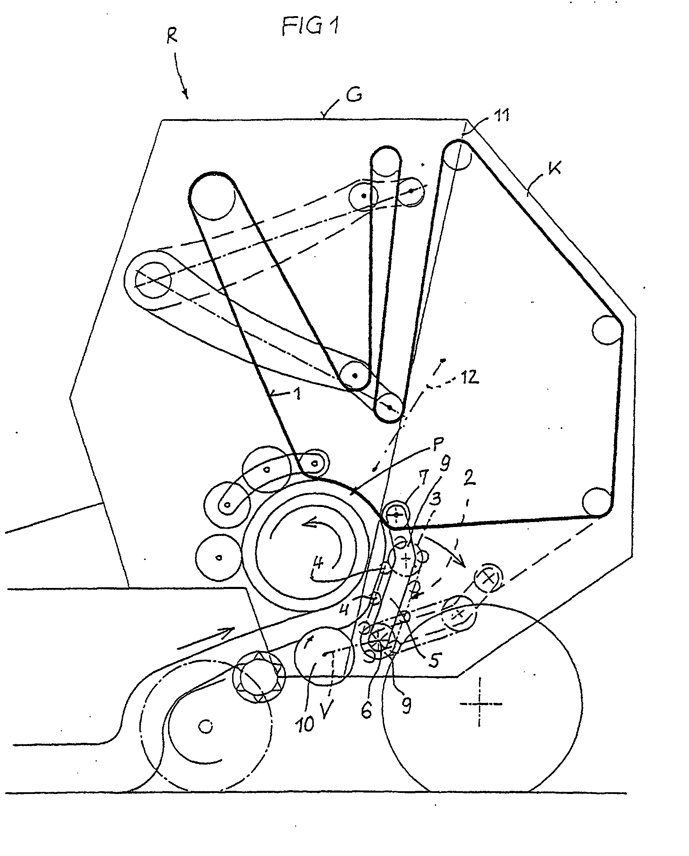

Eine Rundballenpresse R mit variabler Preßkammer P in Fig. 1 weist an einem fahrbaren Gehäuse G eine zu öffnende Klappe K auf, die beispielsweise um eine obenliegende Querachse 11 entgegen dem Uhrzeigersinn schwenkbar ist. Im Gehäuse G und in der Klappe K sind Preß- und Wickelelemente angeordnet, wie beispielsweise eine endlose flexible Preßbahn oder mehrere nebeneinanderliegende Preßriemen 1 und ein kleines, unten in der Klappe K um eine Achse 6 verschwenkbares Preßelement 2, beispielsweise mit beidseitigen Gelenkketten 3 und daran befestigten Querstäben 4, die über Umlenkräder 9 laufen und mit diesen in einer Halterung 5 festgelegt sind. Am oberen Ende der Halterung 5 ist eine Umlenkwalze 7 für die Preßbahn 1 angebracht. Im unteren Bereich der Preßkammer P, deren Preßelemente in Richtung des gestrichelten Pfeiles in Wickelrichtung angetrieben sind, kann eine Starterwalze 10 vorgesehen sein. Ferner ist unten in der Rundballenpresse R eine Antriebsverbindung V zum Umlenkrad 9 des Preßelementes 2 vorgesehen, die entweder die Drehbewegung der Starterwalze 10 weiterleitet, oder die Drehbewegung eines in Fig. 1 nicht gezeigten, gegensinnig zur Wickelrichtung drehangetriebenen Antriebs-Zahnrades.

Die Antriebsverbindung V wird z.B. durch das Schließen der Klappe K, gegebenenfalls gesteuert durch Klappenzylinder 12, hergestellt, und beim Öffnen der Klappe selbsttätig unterbrochen.

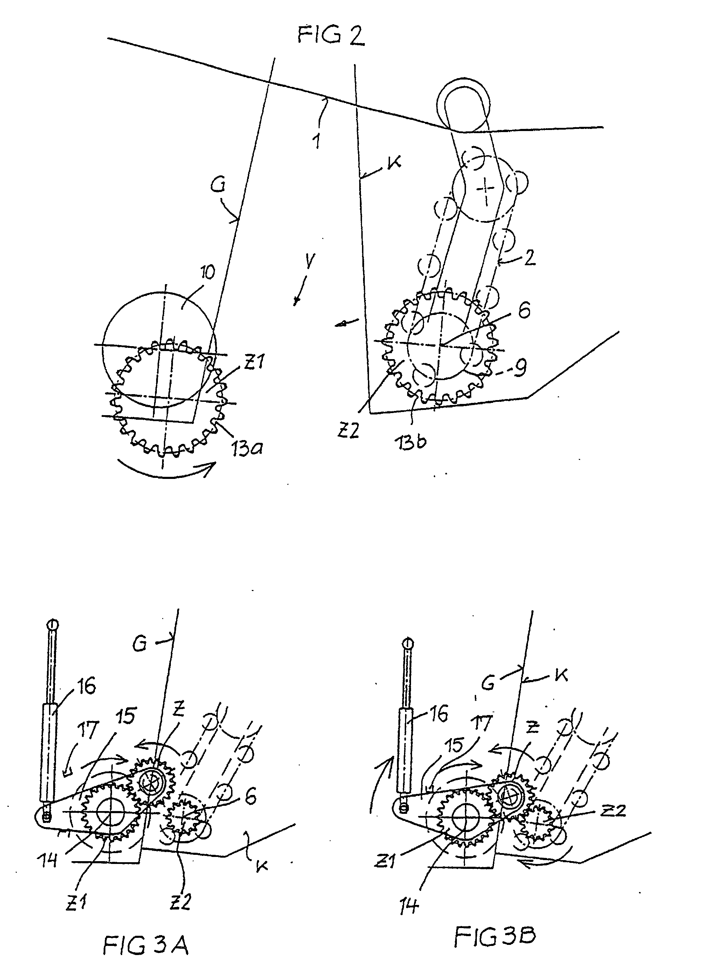

In Fig. 2 ist für die Antriebsverbindung V im Gehäuse G ein Antriebszahnrad Z1 mit Stimradverzahnung 13a entgegen dem Uhrzeigersinn angetrieben. Das Antriebszahnrad Z1 befindet sich seitlich neben und unterhalb der Starterwalze 10, und kann mit dieser in Drehverbindung stehen. Das Antriebszahnrad Z1 steht z.B. geringfügig über die Schließfuge des Gehäuses G über und ist auf ein Abtriebszahnrad Z2 in der Klappe K ausgerichtet. Das Abtriebszahnrad Z2 sitzt beispielsweise auf der Schwenkachse 6 des Preßelementes 2 und steht mit dessen Umlenkrad 9 (einem Kettenrad) in Drehverbindung. Das Abtriebszahnrad Z2 hat eine Stirnverzahnung 13b passend zur Stimverzahnung 13a. Bei der durch einen Pfeil angedeuteten Schließbewegung der Klappe K kommen die Verzahnungen 13a, 13b in Eingriff, sobald die Klappe in etwa ihre endgültige Schließstellung erreicht hat. Dann wird das Abtriebszahnrad Z2 im Uhrzeigersinn drehangetrieben, so daß das Preßelement 2 in Wickelrichtung läuft.

Der in Fig. 1 gezeigte Klappenzylinder 12 kann die Verzahnungen rasch und sicher in Eingriff bringen und halten.

Bei der Ausführungsform der Fig. 3A, 3B ist zusätzlich zum Antriebszahnrad Z1 im Gehäuse G und zum Abtriebszahnrad Z2 in der Klappe K ein permanent mit dem Antriebszahnrad Z1 kämmendes Zwischenzahnrad Z vorgesehen, das in einem um die Achse 14 des Antriebszahnrades Z1 schwenkbaren Träger 15 drehbar gelagert ist. An dem Träger 15 greift ein Stellmotor 16, z.B. ein Hydraulikzylinder an, mit dem das Zwischenzahnrad Z zwischen der in Fig. 3A gezeigten Trennstellung und der in Fig. 3B gezeigten Kuppelstellung verstellbar ist. In der Stellung von Fig. 3A befindet sich zwar das Abtriebszahnrad Z2 schon in der Eingriffsposition. Der Eingriff wird aber erst hergestellt durch eine Verschwenkung des Trägers 15 im Uhrzeigersinn, wobei die gegenseitigen Verzahnungen rasch und verschleißarm in Eingriff gezwungen werden (Fig. 3B). Gegebenenfalls erfolgt das Verschwenken des Trägers 15 überlappend mit dem Abschluß der Schließbewegung der Klappe K, damit die Zähne leicht ineinandergleiten. Alternativ ist es jedoch auch denkbar, wie gezeigt, zunächst die Schließbewegung der Klappe abzuschließen und dann das Zwischenzahnrad Z zu verschwenken. Zweckmäßigerweise sind Anschläge 17 vorgesehen, die Endstellungen (Trennstellung und Kuppelstellung) des Zwischenzahnrades Z begrenzen.

Da das Zwischenzahnrad Z die Drehrichtung vom Antriebszahnrad Z1 zum Abtriebszahnrad Z2 umkehrt, kann das Antriebszahnrad Z1 auf der Achse 14 der Starterwalze 10 sitzen und deren Drehbewegung weiterleiten.

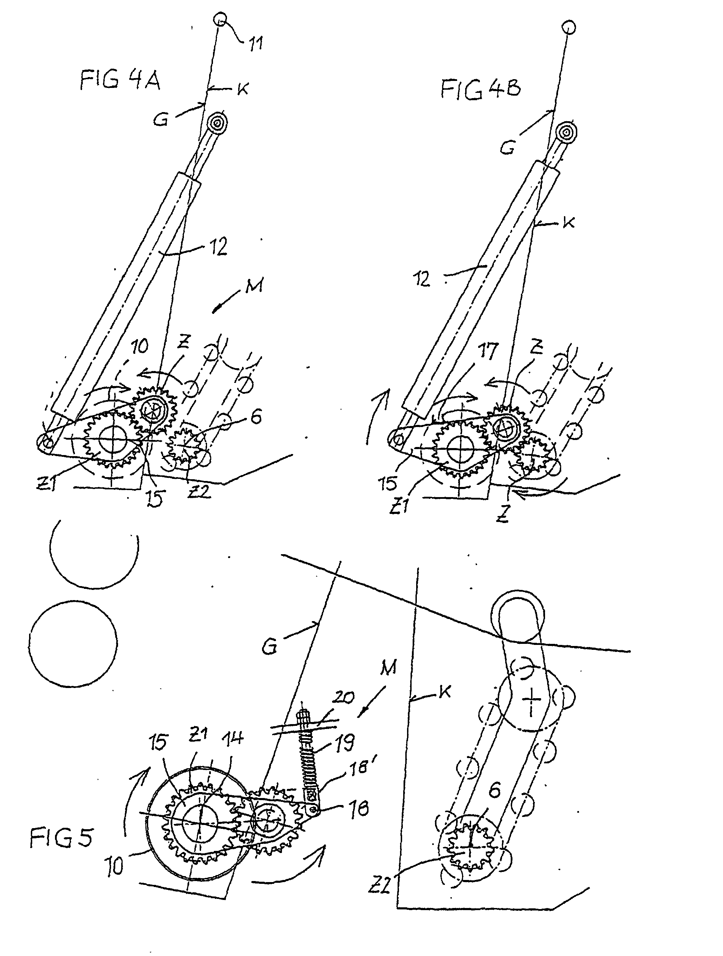

Bei der Ausführungsform der Fig. 4A und 4B wird zum Verstellen des Trägers 15 zwischen der Trennstellung (Fig. 4A) und der Kuppelstellung (Fig. 4B) des Zwischenzahnrades Z der Klappenschließzylinder 12 verwendet, der - wie üblich - bei geschlossener Klappe K eine Klappenverriegelungskraft erzeugt. Die Klappe K kann unter ihrem Gewicht schließen und den Klappenzylinder 12 verkürzen. Der Einschiebewiderstand des Klappenzylinders 12 reicht aus, um den Träger 15 in die in Fig. 4A gezeigte Trennstellung zu verstellen. Sobald die Klappe K ordnungsgemäß geschlossen ist, wird mittels des Klappenzylinders 12 die Verriegelungskraft für die Klappe erzeugt, was bewirkt, daß der Träger 15 im Uhrzeigersinn um die Achse 14 schwenkt und das Zwischenzahnrad Z mit dem Abtriebszahnrad Z2 kuppelt. Auch hier wird zweckmäßig wenigstens ein (nicht gezeigt) Anschlag benutzt, um die Stellungen des Trägers 15 zu definieren und die Verzahnungen gegen schädliche Kräfte des Stellmotors zu schützen.

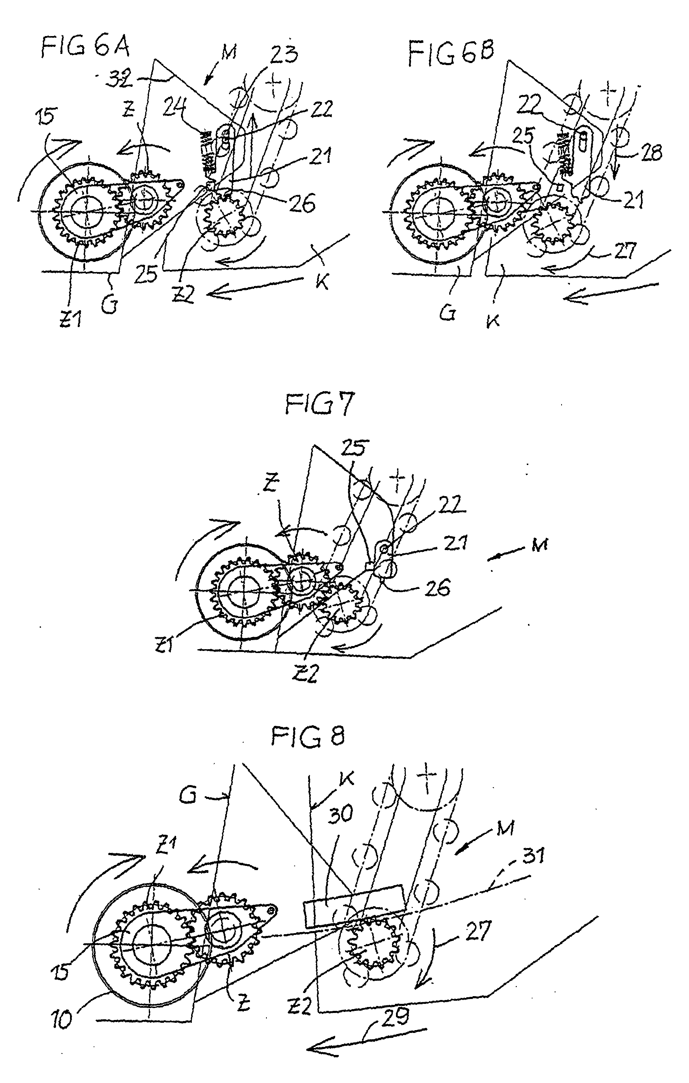

In Fig. 5 ist angedeutet, daß das Zwischenzahnrad Z mit seinem Träger 15 durch einen Hilfsmechanismus M abgestützt wird, der bei 18 am Träger 15 angreift und ein Zugelement 18' aufweist, das an einem stationären Anschlag 20 des Gehäuses G abfangbar ist, um das Zwischenzahnrad Z in der Kuppelstellung festzulegen. Auf oder bei dem Zugglied 18 ist eine Druckfeder 19 angeordnet, die es ermöglicht, daß beim Anlegen des Abtriebszahnrades Z2 das Zwischenzahnrad Z gegen den Uhrzeigersinn um die Achse 14 nachgibt, bis die Verzahnungen ineinander zu gleiten beginnen, und erst dann durch die Feder 19 in Eingriff gedrückt werden. Danach wird der Träger 15 unter der Reaktionskraft bis in die Kuppelstellung gezogen und in dieser über das Zugeelement 18' am Anschlag 20 abgestützt.

In den Fig. 3 bis 5 ist das Zwischenzahnrad Z in permanentem Eingriff mit dem Antriebszahnrad Z1. Alternativ ist es möglich, das Zwischenzahnrad Z mit dem Hilfsmechanismus M in der Klappe K in permanentem Eingriff mit dem Abtriebszahnrad Z2 anzuordnen. Analog zu Fig. 5 könnte dann das Zwischenzahnrad Z beim Auftreffen auf das sich drehende Antriebszahnrad Z1 federnd nach unten nachgeben.

Bei der Ausführungsform der Fig. 6A und 6B ist ein Hilfsmechanismus M vorgesehen, mit dem das Abtriebszahnrad Z2 bei der Schließbewegung der Klappe entweder in eine vorherbestimmte Eingriffsposition gestellt, oder mit einem andauernden Bewegungsimpuls in Wickelrichtung beaufschlagt wird, damit es leichter mit dem sich während des Eingreifens drehenden Zwischenzahnrad Z in Eingriff kommt, und damit der Drehgeschwindigkeitsunterschied durch den vom Hilfsmechanismus M erzeugten Synchronisier-Bewegungsimpuls verringert oder sogar beseitigt wird.

Der Hilfsmechanismus M weist eine Klinke 21 auf, die um ein Schwenklager 22 relativ zu einem Anschlag 25 schwenkbar ist und am freien Ende wenigstens ein Eingriffsglied 26 trägt, das in die Verzahnung des Abtriebszahnrads Z2 paßt und auch so angeordnet ist, daß das Abtriebszahnrad Z2 bei der Schließbewegung der Klappe K vom Eingriffsglied 26 beaufschlagt wird. Da sich bei der Schließbewegung der Klappe K die in das Zwischenzahnrad Z eingreifende Klinke 21 am stationären Anschlag 25 abstützt, muß das Abtriebszahnrad Z2 zwangsweise eine Drehbewegung aufnehmen, die sich fortsetzt, bis das Abtriebszahnrad Z2 (Fig. 6B) wieder von der Klinke 21 freigekommen ist und mit dem Zwischenzahnrad Z in Eingriff gelangt. Der Bewegungsimpuls, den die Klinke 21 auf das Abtriebszahnrad Z2 ausübt, wird verstärkt, wenn die Klinke 21 gemäß Fig. 6A mit einem Langloch 23 an der Schwenklagerung 22 längsverschiebbar ist und in Verschieberichtung durch eine Feder 24 beaufschlagt wird. Dadurch wird die Länge des Eingriffes des Eingriffsgliedes 26 in die Verzahnung des Abtriebszahnrades Z2 vergrößert, und wird durch das Nachschieben der Feder 24 ein besonders nachdrücklicher Bewegungsimpuls in das Abtriebszahnrad Z2 eingeleitet, der sicherstellt, daß sich das Abstriebszahnrad Z2 im richtigen Drehsinn noch dreht, wenn es zum Eingriff mit dem Zwischenzahnrad Z kommt.

Beim Öffnen der Klappe K passiert das Abtriebszahnrad Z2 das Eingriffsglied der Klinke 26. Da die Klinke 21 entgegen dem Uhrzeigersinn frei schwenken kann, wird die Klinke 21 ausgelenkt, ohne Einfluß auf das Abtriebszahnrad auszuüben.

Ähnlich ist bei der Ausführungsform gemäß Fig. 7 ein Eingriffsglied 26 an der Klinke 21 vorgesehen, die am Anschlag 25 abfangbar ist, um dem Abtriebszahnrad Z2 den gewünschten Dreh-Impuls (s. Pfeil) zu erteilen, ehe dieses in Eingriff mit dem Zwischenzahnrad Z kommt Die Klinke 21 ist bei 22 nur schwenkbar gelagert. Die in Fig. 6 gezeigte Feder fehlt.

Bei der Ausführungsform der Fig. 8 wird zum Einleiten des Synchronisier-Bewegungsimpulses auf das Abtriebszahnrad Z2 ein stationär montierter elastischer Körper 30 verwendet, der mit der Verzahnung des Abtriebszahnrades Z2 mit Reibschluß oder unter Verformung durch die Zähne zusammenwirkt. Bei der Schließbewegung der Klappe K wälzt sich das Abtriebszahnrad Z2 am Körper 30 ab, weil die Bewegungsbahn 31 der Verzahnung des Abtriebszahnrades Z2 bei der Schließbewegung 29 der Klappe K der Kontur des elastischen Körpers 30 (z.B. eines Gummiprofils) in etwa folgt. Sobald das Abtriebszahnrad Z2 den elastischen Körper 30 passiert hat, hat es eine Drehbewegung im richtigen Sinn, so daß der Eingriff mit dem Zwischenzahnrad Z einfach von statten geht. Gegebenenfalls kann auch bei Verwendung eines solchen Hilfsmechanismus M der Träger 15 des Zwischenzahnrades mit der federnden Abstützung gemäß Fig. 5 kombiniert sein oder wird der Träger 15 durch den Klappenzylinder 12 oder den Stellmotor 16 (Fig. 3, 4) bewegt.

In Fig. 8 dreht das Antriebszahnrad Z1 im Uhrzeigersinn, während das Zwischenzahnrad Z entgegen dem Uhrzeigersinn dreht. Durch den Hilfsmechanismus M wird auch das Abtriebszahnrad Z2 in eine Drehung im Uhrzeigersinn versetzt, die den Eingriff in das Zwischenzahnrad Z vereinfacht.

In den erläuterten Ausführungsformen erfolgt die Antriebsübertragung vom Gehäuse in die Klappe. Das Preßelement ist funktioneller Teil der Klappe und vollständig vom Gehäuse getrennt. Es ist wäre möglich, bei in der Klappe vorhandenen Antriebseinrichtungen eine gleichartige Antriebsübertragung von der Klappe in das Gehäuse vorzunehmen.

## Patentansprüche

1. Rundballenpresse (R) mit einer an einem Gehäuse (G) zum Öffnen angebrachten Klappe (K), in der bei geschlossener Klappe (K) ein in Wickelrichtung antreibbares Preßelement (2) vorgesehen ist, und mit einer Antriebsverbindung (V) zwischen dem Gehäuse (G) und dem Preßelement (2), **dadurch gekennzeichnet, daß** bei vom Gehäuse (G) separiert direkt in der Klappe (K) gelagertem Preßelement (2) die Antriebsverbindung (V) mindestens ein Antriebszahnrad (Z1) im Gehäuse (G) und mindestens ein Abtriebszahnrad (22) in der Klappe (K) aufweist, und daß das Abtriebszahnrad (Z2) mittels der Klappenschließ-Bewegung in direkten Eingriff mit dem Antriebszahnrad (Z1) bringbar ist.

2. Rundballenpresse (R) mit einer an einem Gehäuse (G) zum Öffnen angebrachten Klappe (K), in der bei geschlossener Klappe (K) ein in Wickelrichtung antreibbares Preßelement (2) vorgesehen ist, und mit einer Antriebsverbindung (V) zwischen dem Gehäuse (G) und dem Preßelement (2), **dadurch gekennzeichnet, daß** bei vom Gehäuse (G) separiert direkt in der Klappe (K) gelagertem Preßelement (2) die Antriebsverbindung (V) mindestens ein Antriebszahnrad (Z1) im Gehäuse (G) und mindestens ein Abtriebszahnrad (Z2) in der Klappe (K) aufweist, und daß das Abtriebszahnrad (Z2) mittels der Schließbewegung der Klappe (K) in eine Vor-Eingriffsposition mit dem Antriebszahnrad (Z1) bringbar und mit einem durch einen Klappen-Verriegelungsantrieb (12) in Kuppelstellung bringbares Zwischenzahnrad (Z) mit dem Antriebszahnrad (Z1) kuppelbar ist.

3. Rundballenpresse (R) mit einer an einem Gehäuse (G) zum Öffnen angebrachten Klappe (K), in der bei geschlossener Klappe (K) ein in Wickelrichtung antreibbares Preßelement (2) vorgesehen ist, und mit einer Antriebsverbindung (V) zwischen dem Gehäuse (G) und dem Preßelement (2), **dadurch gekennzeichnet, daß** bei vom Gehäuse (G) separiert direkt in der Klappe (K) gelagertem Preßelement (2) die Antriebsverbindung (V) mindestens ein Antriebszahnrad (Z1) im Gehäuse (G) und mindestens ein Abtriebszahnrad (Z2) in der Klappe (K) aufweist, und daß das Abtriebszahnrad (Z2) mittels der Schließbewegung der Klappe (K) in eine Vor-Eingriffsposition mit dem Antriebszahnrad (Z1) bringbar und durch ein mittels eines Kuppelantriebs (16) in eine Kuppelstellung verstellbares Zwischenzahnrad (Z) mit dem Antriebszahnrad (Z1) kuppelbar ist.

4. Rundballenpresse nach Anspruch 2, **dadurch gekennzeichnet, daß** das Zwischenzahnrad (Z) permanent mit dem Antriebszahnrad (Z1) kämmt und in einem um die Achse des Antriebszahnrads (Z1) schwenkbaren, vorzugsweise an wenigstens einem Anschlag (17) abfangbaren Träger, (15) gelagert ist, an dem ein Klappen-Zylinder (12) angreift, mit dem der Träger (15) zwischen einer Trenn- und der Kuppelstellung verstellbar ist.

5. Rundballenpresse nach Anspruch 3, **dadurch gekennzeichnet, daß** das Zahnrad (Z) permanent mit dem Antriebszahnrad (Z1) kämmt und in einem um die Achse (14) des Antriebszahnrades schwenkbaren, vorzugsweise an wenigstens einem Anschlag (17) abfangbaren, Träger (15) gelagert ist, an dem ein Stellmotor (16), vorzugsweise ein Hydraulikzylinder, angreift, mit dem der Träger (15) zwischen einer Trenn- und der Kuppelstellung verstellbar ist.

6. Rundballenpresse nach wenigstens einem der Ansprüche 1 bis 3, **dadurch gekennzeichnet, daß** im Gehäuse (G) ein zum Kuppeln der Zahnräder (Z1, Z2) betätigbarer Hilfsmechanismus (M) zum Unterstützen des Verzahnungseingriffes vorgesehen ist, und daß der Hilfsmechanismus (M) durch die Relativbewegung zwischen dem Antriebs-Zahnrad (Z1) und dem Abtriebszahnrad (Z2) beim Schließen der Klappe (K) betätigbar ist.

7. Rundballenpresse nach Anspruch 6, **dadurch gekennzeichnet, daß** der Hilfsmechanismus (M) im Bewegungsweg (31) des Abtriebszahnrades (Z2) beim Schließen der Klappe (K) angeordnet und unter Nutzen der Klappenschließbewegung vorübergehend in Wickelrichtung an der Verzahnung (13b) des Abtriebszahnrads (Z2) zum Angriff bringbar ist.

8. Rundballenpresse nach wenigstens einem der Ansprüche 1 bis 7, **dadurch gekennzeichnet, daß** das Zwischenzahnrad (Z), vorzugsweise im Hilfsmechanismus (M), in einer Schwenkrichtung aus der Kuppelstellung federnd nachgiebig im Gehäuse (G) abgestützt ist.

9. Rundballenpresse nach Anspruch 7, **dadurch gekennzeichnet, daß** der Hilfsmechanismus (M) eine im Gehäuse (G) gegen einen Anschlag (25) schwenkbare Klinke (21) mit wenigstens einem in die Verzahnung (13b) des Abtriebszahnrades (Z2) passenden Eingriffsglied (26) aufweist, daß das Eingriffsglied (26) derart in den Bewegungsweg (31) der Verzahnung des Abtriebszahnrades (Z2) bei der Schließbewegung der Klappe (K) ragt, daß das Abtriebszahnrad (Z2) beim Schließen der Klappe (K) vor Erreichen seiner Eingriffsposition mit dem Antriebszahnrad (Z1) bzw. dem Zwischenzahnrad (Z) vom Eingriffsglied (26) in eine vorbestimmte Drehlage eingestellt oder mit einem anhaltenden Synchronisler-Bewegungsimpuls in Wickelrichtung beaufschlagt wird.

10. Rundballenpresse nach Anspruch 9, **dadurch gekennzeichnet, daß** die Klinke (21) in ihrer Schwenklagerung (22) gegen Federkraft längsverschiebbar geführt ist.

11. Rundballenpresse nach Anspruch 9, **dadurch gekennzeichnet, daß** die Klinke (21) einen stangen- oder bügelartigen Verzahnungsträger mit mehreren Eingriffsgliedem (26) aufweist.

12. Rundballenpresse nach Anspruch 7, **dadurch gekennzeichnet, daß** der Hilfsmechanismus (M) einen elastischen Körper (30), vorzugsweise ein Gummiprofil, aufweist, an dem beim Schließen der Klappe (K) die Verzahnung (13b) des Abtriebszahnrades (Z2) reibungsbehaftet und/oder mit Verformungsarbeit im elastischen Körper (30) abwälzbar ist, um dem Abtriebszahnrad (Z2) einen Synchronisier-Bewegungsimpuls zu erteilen.

13. Rundballenpresse nach einem der vorhergehenden Ansprüche, **dadurch gekennzeichnet, daß** die Zahnräder (Z1, Z2, Z) als Kettenräder oder als Reibräder ausgebildet sind.

## Claims

1. Roll baler (R), including a flap (K), which is attached to a housing (G) for opening purposes, and in which flap there is provided, when the flap (K) is closed, a pressing member (2) which is drivable in the winding/rolling direction, and including a driving connection (V) between the housing (G) and the pressing member (2), **characterised in that**, when the pressing member (2) is mounted directly in the flap (K) separately from the housing (G), the driving connection (V) has at least one driving toothed wheel (Z1) in the housing (G) and at least one driven toothed wheel (Z2) in the flap (K), and **in that** the driven toothed wheel (Z2) can be brought into direct engagement with the driving toothed wheel (Z1) by means of the closing movement of the flap.

2. Roll baler (R), including a flap (K), which is attached to a housing (G) for opening purposes, and in which flap there is provided, when the flap (K) is closed, a pressing member (2) which is drivable in the winding direction, and including a driving connection (V) between the housing (G) and the pressing member (2), **characterised in that**, when the pressing member (2) is mounted directly in the flap (K) separately from the housing (G), the driving connection (V) has at least one driving toothed wheel (Z1) in the housing (G) and at least one driven toothed wheel (Z2) in the flap (K), and **in that** the driven toothed wheel (Z2) can be brought into a preliminary engagement position with the driving toothed wheel (Z1) by means of the closing movement of the flap (K) and is connectable to the driving toothed wheel (Z1) by means of an intermediate toothed wheel (Z) which can be brought into the coupling position by a flap locking drive (12).

3. Roll baler (R), including a flap (K), which is attached to a housing (G) for opening purposes, and in which flap there is provided, when the flap (K) is closed, a pressing member (2) which is drivable in the winding direction, and including a driving connection (V) between the housing (G) and the pressing member (2), **characterised in that**, when the pressing member (2) is mounted directly in the flap (K) separately from the housing (G), the driving connection (V) has at least one driving toothed wheel (Z1) in the housing (G) and at least one driven toothed wheel (Z2) in the flap (K), and **in that** the driven toothed wheel (Z2) can be brought into a preliminary engagement position with the driving toothed wheel (Z1) by means of the closing movement of the flap (K) and is connectable to the driving toothed wheel (Z1) by an intermediate toothed wheel (Z), which is adjustable into a coupling position by means of a coupling drive (16).

4. Roll baler according to claim 2, **characterised in that** the intermediate toothed wheel (Z) meshes permanently with the driving toothed wheel (Z1) and is mounted in a carrier (15) which is pivotable about the axis of the driving toothed wheel (Z1) and can be supported preferably on at least one stop member (17), a flap cylinder (12) co-operating with said carrier, and the carrier (15) being adjustable by said cylinder between a severing position and the coupling position.

5. Roll baler according to claim 3, **characterised in that** the toothed wheel (Z) meshes permanently with the driving toothed wheel (Z1) and is mounted in a carrier (15), which is pivotable about the axis (14) of the driving toothed wheel and can be supported preferably on at least one stop member (17), a setting motor (16), preferably an hydraulic cylinder (12), co-operating with said carrier, and the carrier (15) being adjustable by said cylinder between a severing position and the coupling position.

6. Roll baler according to at least one of claims 1 to 3, **characterised in that** an auxiliary mechanism (M), which is actuatable for the coupling of the toothed wheels (Z1, Z2), is provided in the housing (G) to assist the toothing engagement, and **in that** the auxiliary mechanism (M) is actuatable by the relative movement between the driving toothed wheel (Z1) and the driven toothed wheel (Z2) during the closure of the flap (K).

7. Roll baler according to claim 6, **characterised in that** the auxiliary mechanism (M) is disposed in the displacement path (31) of the driven toothed wheel (Z2) during the closure of the flap (K) and can be brought to cooperate with the toothing (13b) of the driven toothed wheel (Z2) by using the flap closing movement temporarily in the winding direction.

8. Roll baler according to at least one of claims 1 to 7, **characterised in that** the intermediate toothed wheel (Z), preferably in the auxiliary mechanism (M), is supported in a flexibly resilient manner in the housing (G) in a pivotal direction from the coupling position.

9. Roll baler according to claim 7, **characterised in that** the auxiliary mechanism (M) has a pawl (21), which is pivotable towards a stop member (25) in the housing (G) and has at least one engagement member (26), which fits into the toothing (13b) of the driven toothed wheel (Z2), and **in that** the engagement member (26) protrudes into the displacement path (31) of the toothing of the driven toothed wheel (Z2) during the closing movement of the flap (K) in such a manner that the driven toothed wheel (Z2) is set into a predetermined rotational position by the engagement member (26) during the closure of the flap (K) prior to reaching its position of engagement with the driving toothed wheel (Z1), or respectively with the intermediate toothed wheel (Z), or said driven toothed wheel has a continuous synchronising movement pulse acting thereon in the winding direction.

10. Roll baler according to claim 9, **characterised in that** the pawl (21) is guided in a longitudinally displaceable manner in its pivotal bearing (22) in opposition to resilient force.

11. Roll baler according to claim 9, **characterised in that** the pawl (21) has a rod- or clamp-like toothing carrier provided with a plurality of engagement members (26).

12. Roll baler according to claim 7, **characterised in that** the auxiliary mechanism (M) has a resilient body (30), preferably a rubber profile, to which the toothing (13b) of the driven toothed wheel (Z2) is frictionally adhered during the closure of the flap (K) and/or said toothing can be rolled in the resilient body (30) with deformation work in order to provide the driven toothed wheel (Z2) with a synchronising movement pulse.

13. Roll baler according to one of the preceding claims, **characterised in that** the toothed wheels (Z1, Z2, Z) are in the form of chain wheels or in the form of friction wheels.

## Revendications

1. Presse à balles rondes (R) avec un volet (K) montée sur un boîtier (G) pour l'ouverture, où, le volet (K) étant fermé, il est prévu un élément de compression (2) pouvant être entraîné dans la direction d'enroulement, et avec une liaison d'entraînement (V) entre le boîtier (G) et l'élément de compression (2), **caractérisée en ce que** dans le cas de l'élément de compression (2) séparé du boîtier (G), logé directement dans le volet (K), la liaison d'entraînement (V) présente au moins une roue dentée menante (Z1) dans le boîtier (G) et au moins une roue dentée menée (Z2) dans le volet (K), et **en ce que** la roue dentée menée (Z2) peut être amenée par le mouvement de fermeture de volet en prise directe avec la roue dentée menante (Z1).

2. Presse à balles rondes (R) avec un volet (K) montée sur un boîtier (G) pour l'ouverture, où, le volet (K) étant fermé, il est prévu un élément de compression (2) pouvant être entraîné dans la direction d'enroulement, et avec une liaison d'entraînement (V) entre le boîtier (G) et l'élément de compression (2), **caractérisée en ce que** dans le cas de l'élément de compression (2), séparé du boîtier (G), logé directement dans le volet (K), la liaison d'entraînement (V) présente au moins une roue dentée menante (Z1) dans le boîtier (G) et au moins une roue dentée menée (Z2) dans le volet (K), et **en ce que** la roue dentée menée (Z2) peut être amenée au moyen du mouvement de fermeture du volet (K) dans une position de prise préalable avec la roue dentée menante (Z1) et peut être couplée par une roue dentée intermédiaire (Z) pouvant être amenée par une commande de verrouillage de volet (12) en position de couplage avec la roue dentée menante (Z1).

3. Presse à balles rondes (R) avec un volet (K) montée sur un boîtier (G) pour l'ouverture, où, le volet (K) étant fermé, il est prévu un élément de compression(2) pouvant être entraîné dans la direction d'enroulement, et avec une liaison d'entraînement (V) entre le boîtier (G) et l'élément de compression (2), **caractérisée en ce que** dans le cas de l'élément de compression (2), séparé du boîtier (G), logé directement dans le volet (K), la liaison d'entraînement (V) présente au moins une roue dentée menante (Z1) dans le boîtier (G) et au moins une roue dentée menée (Z2) dans le volet (K), et **en ce que** la roue dentée menée (Z2) peut être amenée au moyen du mouvement de fermeture du volet (K) dans une position de prise préalable avec la roue dentée menante (Z1) et peut être couplée par une roue dentée intermédiaire (Z) pouvant être amenée par une commande de couplage (16) en une position de couplage, avec la roue dentée menante (Z1).

4. Presse à balles rondes selon la revendication 2, **caractérisée en ce que** la roue dentée intermédiaire (Z) engrène en permanence avec la roue dentée menante (Z1) et est logée dans un support (15) apte à pivoter autour de l'axe de la roue dentée menante (Z1), pouvant être arrêtée de préférence à au moins une butée (17), auquel s'applique un vérin de volet au moyen duquel le support (15) est déplaçable entre une position séparée et la position de couplage.

5. Presse à balles rondes selon la revendication 3, **caractérisée en ce que** la roue dentée (Z) engrène en permanence avec la roue dentée menante (Z1) et est logée dans un support (15) apte à pivoter autour de l'axe (14) de la roue dentée menante, pouvant être arrêtée de préférence à au moins une butée (17), auquel s'applique un moteur de positionnement (16), de préférence un vérin hydraulique au moyen duquel le support (15) est déplaçable entre une position séparée et la position de couplage.

6. Presse à balles rondes selon au moins l'une des revendications 1 à 3, **caractérisée en ce qu'**il est prévu dans le boîtier (G) un mécanisme auxiliaire (M) actionnable pour le couplage des roues dentées (Z1, Z2) pour soutenir la mise en prise des dentures, et **en ce que** le mécanisme auxiliaire (M) est actionnable par le déplacement relatif entre la roue dentée menante (Z1) et la roue dentée menée (Z2) lors de la fermeture du volet (K).

7. Presse à balles rondes selon la revendication 6, **caractérisée en ce que** le mécanisme auxiliaire (M) est disposé dans le chemin de déplacement (31) de la roue dentée menée (Z2) lors de la fermeture du volet (K) et, en tirant profit du mouvement de fermeture du volet, peut être amené temporairement dans la direction d'enroulement en prise avec la denture (13b) de la roue dentée menée (Z2).

8. Presse à balles rondes selon au moins l'une des revendications 1 à 7, **caractérisée en ce que** la roue dentée intermédiaire (Z), de préférence dans le mécanisme auxiliaire (M), prend appui, dans une direction de pivotement depuis la position de couplage, d'une manière élastique dans le boîtier (G).

9. Presse à balles rondes selon la revendication 7, **caractérisée en ce que** le mécanisme auxiliaire (M) présente un cliquet (21) apte à pivoter dans le boîtier (G) contre une butée (25) avec au moins un organe d'engagement (26) s'adaptant dans la denture (13b) de la roue dentée menée (Z2), que l'organe d'engagement (26) fait saillie de telle sorte dans le chemin de déplacement (31) de la denture de la roue dentée menée (Z2) lors du mouvement de fermeture du volet (K) que la roue dentée menée (Z2), lors de la fermeture du volet (K) avant l'atteinte de sa position d'engagement avec la roue dentée menante (Z1) respectivement la roue dentée intermédiaire (Z), est réglée par l'organe d'engagement (26) à une position de rotation prédéterminée ou est sollicitée par une impulsion de déplacement de synchronisation continue dans la direction d'enroulement.

10. Presse à balles rondes selon la revendication 9, **caractérisée en ce que** le cliquet (21) est guidé d'une manière déplaçable longitudinalement dans son logement pivotant (22) contre la force de ressort.

11. Presse à balles rondes selon la revendication 9, **caractérisée en ce que** le cliquet (21) présente un support d'engrènement en forme de tige ou d'étrier avec plusieurs organes d'engagement (26).

12. Presse à balles rondes selon la revendication 7, **caractérisée en ce que** le mécanisme auxiliaire (M) présente un corps élastique (30), de préférence un profilé en caoutchouc sur lequel, lors de la fermeture du volet (K), la denture (13b) de la roue dentée menée (Z2) peut rouler à friction et/ou avec un travail de déformation dans le corps élastique (30) pour conférer à la roue dentée menée (Z2) une impulsion de déplacement de synchronisation.

13. Presse à balles rondes selon l'une des revendications précédentes, **caractérisée en ce que** les roues dentées (Z1, Z2, Z) sont réalisées sous forme de roues à chaîne ou de roues à friction.
